# EUROPÄISCHE PATENTSCHRIFT

(11) **EP 2 635 971 B1**
(45) Veröffentlichungstag und Bekanntmachung des Hinweises auf die Patenterteilung: **27.01.2016**
(21) Anmeldenummer: 11782093.6
(22) Anmeldetag: 03.11.2011
(51) Int. Cl.: G06F 13/40

(54) **VORRICHTUNG UND VERFAHREN ZUR SERIELLEN DATENÜBERTRAGUNG MIT HOHER DATENRATE**
DEVICE AND METHOD FOR SERIAL DATA TRANSMISSION AT A HIGH DATA RATE
DISPOSITIF ET PROCÉDÉ DE TRANSMISSION EN SÉRIE DE DONNÉES À HAUT DÉBIT

(30) Priorität: 05.11.2010 DE 102010043484
(43) Veröffentlichungstag der Anmeldung: 11.09.2013
(73) Patentinhaber: Robert Bosch GmbH, 70442 Stuttgart (DE)
(72) Erfinder: HARTWICH, Florian, 72762 Reutlingen (DE); MACHAUER, Ralf, 71672 Marbach A.N. (DE)
(86) Internationale Anmeldenummer: PCT/EP2011/069268
(87) Internationale Veröffentlichungsnummer: WO 2012/059521

(56) Entgegenhaltungen:
- WO-A1-00/57557
- US-A- 5 920 204
- US-B1- 7 394 281
- "2.1 CAN Datenübertragungschicht, Prinzip der Busarbitrierung" In: Konrad Etschberger: "Controller Area Network", 31. Dezember 2002 (2002-12-31), Hanser, München, XP002671220, ISBN: 3-446-21776-2 Bd. 3, Seiten 59-63, Seite 59 - Seite 63
- G. CENA, A. VALENZANO: "Overclocking of controller area networks", ELECTRONICS LETTERS, Bd. 35, Nr. 22, 28. Oktober 1999 (1999-10-28), Seiten 1923-1925, XP002671221,

## Beschreibung

### Stand der Technik

Die Erfindung betrifft eine Vorrichtung und ein Verfahren zur schnellen Übertragung von Daten zwischen wenigstens zwei Teilnehmern eines Bussystems.

Beispielsweise aus der ISO-Norm 11898 ist das Controller Area Network (CAN) sowie eine als "Time Triggered CAN" (TTCAN) bezeichnete Erweiterung des CAN bekannt. Das beim CAN verwendete Medienzugriffssteuerverfahren beruht auf einer bitweisen Arbitrierung. Bei der bitweisen Arbitrierung können mehrere Busteilnehmer gleichzeitig Daten über den Kanal des Bussystems übertragen, ohne dass hierdurch die Datenübertragung gestört wird. Die Busteilnehmer können weiterhin beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet der Busteilnehmer den Zugriff auf den Kanal. Bei CAN wird die bitweise Arbitrierung üblicherweise in einem Arbitrierungsfeld innerhalb einer über den Kanal zu übertragenden Nachricht vorgenommen.

Durch die bitweise Arbitrierung wird eine zerstörungsfreie Übertragung der Nachricht über den Kanal erreicht. Hierdurch ergeben sich gute Echtzeiteigenschaften des CAN, wohingegen bei den Medienzugriffssteuerverfahren, bei denen die von einem Busteilnehmer gesendete Nachricht aufgrund einer Kollision mit einer von einer anderen Station gesendeten weiteren Nachricht während der Übertragung über den Kanal zerstört werden kann, ein deutlich ungünstigeres Echtzeitverhalten haben, da es aufgrund der Kollision und der dadurch erforderlichen neuen Übertragung der Nachricht zu einer Verzögerung der Datenübertragung kommt.

Die Protokolle des CAN eignen sich besonders zum Übertragen kurzer Meldungen unter Echtzeitbedingungen. Sollen größere Datenblöcke über eine CAN-Domäne übertragen werden, dann wird die relativ geringe Bitrate des Kanals zu einem begrenzenden Faktor. Um die korrekte Funktion der bitweisen Arbitrierung zu gewährleisten, muss während der Arbitrierung für die Übertragung eines Bits eine in erster Linie von der Ausdehnung des Bussystems, der Signalausbreitungsgeschwindigkeit auf dem Kanal und intrinsischen Verarbeitungszeiten in den Schnittstellenmodulen der Busteilnehmer abhängige Mindestdauer eingehalten werden, denn alle Busteilnehmer müssen ein einheitliches Bild des Buszustands (0 oder 1) und gleichberechtigten Zugriff auf den Buszustand haben.

Die Bitrate kann durch Verringern der Dauer der einzelnen Bits daher nicht ohne weitere Maßnahmen erhöht werden. Da die Signalausbreitungsgeschwindigkeit auf dem Kanal im wesentlichen festliegt, benötigt man, wenn man kürzere Bitlängen erreichen möchte, eine geringere Ausdehnung des Bussystems, oder geringere intrinsische Verarbeitungszeiten. Zu den intrinsischen Verarbeitungszeiten tragen wesentlich die Zeiten bei, die benötigt werden, bis sich der jeweilige Buspegel einstellt. Hierbei ist zu beachten, dass zur Einstellung des dominanten Buspegels die jeweils sendende Station mittels einer entsprechenden Endstufe einen Strom auf den Bus treibt, welcher zum Aufbau einer entsprechenden Spannungsdifferenz führt. Der rezessive Buspegel hingegen stellt sich dadurch ein, dass die Spannungsdifferenz zwischen den beiden Busleitungen sich über Abschlusswiderstände abbaut beziehungsweise auf einen vom dominanten Buspegel abweichenden Wert verändert. Dieser abweichende Wert kann Null sein, aber auch eine von Null verschiedene Spannungsdifferenz.

Das Prinzip der Busarbitirierung bei CAN ist ausführlich beschrieben in Konrad Etschberger: "Controller Area Network", 2002, Hanser, Band 3, S. 59-63.

Die internationale Offenlegungsschrift WO 00/57557 offenbart eine Beschleunigungsschaltung, mit der bei Computer-Backplane-Bussen durch Treiben eines zusätzlichen Stromes ein schnelleres Einstellen des jeweiligen Buspegels erreicht werden kann.

Die US-Patentschrift US 7394281 B1 offenbart eine Schaltung, um in einem USB-Bus schnellere Wechsel der Buspegel zu ermöglichen.

G. Cena und A. Valenzano behandeln in "Overclocking of controller area networks" (Electronics Letters, Vol. 35, No. 22 (1999), S. 1924) von theoretischer Seite die Auswirkungen einer Übertaktung der Busfrequenz in Teilbereichen der Nachricht auf die effektiv erzielte Datenrate, ohne jedoch auf Details der Methodik und die Problematik der die Busfrequenz begrenzenden Faktoren, beispielsweise Signalausbreitungsgeschwindigkeit und intrinsische Verarbeitungszeiten in den Schnittstellenmodulen der Busteilnehmer, einzugehen.

Es zeigt sich aus den zitierten Schriften, dass der Stand der Technik nicht in jeder Hinsicht befriedigende Ergebnisse liefert.

### Offenbarung der Erfindung

Aufgabe der Erfindung ist es, eine Vorrichtung zu beschreiben, mittels welcher Busteilnehmer, beispielsweise Steuergeräte, in einem zweidrahtigen Bussystem mit dominantem und rezessivem Buspegel Nachrichten in kürzerer Zeit übertragen können.

Die beschriebene Aufgabe wird durch diese Vorrichtung mit den Merkmalen des unabhängigen Anspruchs eins und das in der Vorrichtung verwendete Verfahren gelöst.

### Vorteile der Erfindung

Die Erfindung wird anhand einer Weiterentwicklung eines CAN-Bussystems erläutert, in welcher durch die vorgeschlagene Vorrichtung Nachrichten in kürzerer Zeit übertragen werden können, als dies in einem CAN-Netzwerk aus dem Stand der Technik möglich ist. Hierzu wird ein gegenüber der CAN-Norm nach ISO 11898 modifizierter Transceiver vorgeschlagen. Die Erfindung ist in gleicher Weise auch in anderen Bussystemen einsetzbar, in denen sich einer der Buspegel, also eine Spannungsdifferenz zwischen Leitungen, durch Fließen eines Stromes über Abschlusswiderstände einstellt. Selbstverständlich ist die beschriebene Erfindung auch in TTCAN-Netzwerken anwendbar.

Die beschriebene Aufgabe wird in der erfindungsgemäßen Vorrichtung dadurch gelöst, dass eine sendende Station die Einstellung des rezessiven Buspegels durch Treiben eines geeigneten, gegebenenfalls zusätzlichen elektrischen Stromes beschleunigt.

Es kann hierbei von Vorteil sein, die erfindungsgemäßen Vorrichtung umschaltbar zu gestalten, so dass nur in einem bestimmten Zustand die zusätzlich getriebene Stromstärke zum Einstellen der Buspegel verwendet wird. Auf diese Weise kann beispielsweise das erfindungsgemäße Verfahren nur in bestimmten Abschnitten einer zu übertragenden Nachricht angewendet werden. Es ist des weiteren möglich, dadurch im laufenden Betrieb zwischen Buskommunikation gemäß dem heutigen Standard und beschleunigter Buskommunikation umzuschalten.

Vorteilhafter Weise treibt die erfindungsgemäßen Vorrichtung bei einem Wechsel vom dominanten zum rezessiven Buspegel einen definierten Strom zwischen den beiden Busleitungen, so dass die Ziel-Spannungsdifferenz im rezessiven Fall schneller erreicht wird. Hierbei kann der getriebene Strom durch eine zeitliche Begrenzung, oder durch eine Leistungsbegrenzung, oder durch Messen der Spannungsdifferenz und Abschaltung bei Erreichen eines bestimmten Schwellwertes begrenzt werden. Dies ist insbesondere deswegen wichtig, weil andere Stationen die Möglichkeit haben müssen, den rezessiven Buspegel durch ein dominantes Bit zu überschreiben. Dieser Fall kann nämlich sowohl während der Arbitrierung, als auch bei Erkennen eines Fehlers, um nur zwei Beispiele zu nennen, auftreten.

Es ist ebenfalls vorteilhaft, dass die erfindungsgemäßen Vorrichtung bei einem Wechsel vom rezessiven zum dominanten Buspegel den getriebenen Strom gegenüber den aus dem Stand der Technik bekannten Vorrichtungen modifiziert. Es ist möglich, dass der betreffende Strom erhöht wird, beziehungsweise ein zusätzlicher Strom parallel zugeführt wird. Es kann aber auch eine Reduktion der Stromstärke und dementsprechend eine Verlangsamung dieses Flankenwechsels sinnvoll sein, beispielsweise um die im Mittel pro Zeiteinheit abgestrahlte elektromagnetische Strahlung innerhalb vorgegebener Grenzen zu halten. Auch dieses Verhalten kann wieder abhängig von einer Umschaltbedingung gemacht werden.

In einer besonders vorteilhaften Ausprägung ist die Vorrichtung so gestaltet, dass die Umschaltbedingung von der Vorrichtung durch Analyse der empfangenen Datensignale selbst ermittelt wird. Ebenfalls von Vorteil ist es, wenn die Vorrichtung durch einen geeigneten Ausgang ihren aktuellen Schaltzustand an den ansteuernden Controller zurückmeldet.

### Zeichnungen

Die Erfindung wird im weiteren anhand der Zeichnungen näher erläutert.
Figur 1 zeigt ein schematisches Blockschaltbild eines Transceivers nach dem Stand der Technik mit den Ein- und Ausgängen zum Controller und zu den Busanschlüssen, Spannungsversorgung und Erdung.
Figur 2 zeigt ein schematisches Blockschaltbild einer erfindungsgemäßen Vorrichtung mit einer zusätzlichen Sendeteilschaltung und einem zusätzlichen Eingang zu deren Umschaltung.
Figur 3 zeigt ein schematisches Blockschaltbild einer erfindungsgemäßen Vorrichtung mit einer zusätzlichen Sendeteilschaltung sowie einer Einrichtung zur selbständigen Umschaltung abhängig von der Analyse der Signale am Eingang TxD.
Figur 4 zeigt einen beispielhaften Ausschnitt aus dem Schaltplan einer Vorrichtung nach dem Stand der Technik mit den wesentlichen Elementen der Sendeteilschaltung.
Figur 5 zeigt einen beispielhaften Ausschnitt aus dem Schaltplan einer erfindungsgemäßen Vorrichtung mit den wesentlichen Elementen der modifizierten Sendeteilschaltung, bestehend aus der ursprünglichen Sendeteilschaltung und zusätzlichen Elementen der Beschleunigungsteilschaltung.
Figur 6 zeigt einen beispielhaften Ausschnitt aus dem Schaltplan einer weiteren Ausführungsform einer erfindungsgemäßen Vorrichtung mit den wesentlichen Elementen der modifizierten Sendeteilschaltung, bestehend aus der ursprünglichen Sendeteilschaltung und zusätzlichen Elementen der Beschleunigungsteilschaltung.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Umfang des Erfindungsgedankens. Das behandelte Bussystem wird als zweidrahtiger Kommunikationsbus angenommen, wobei hiermit zwei leitende Verbindungen gemeint sind, deren Potenzialdifferenz das Bussignal darstellt. Es kann beispielsweise auch eine der beiden Leitungen durch leitfähige, miteinander leitend verbundene Karosserieteile eines Automobils dargestellt sein.

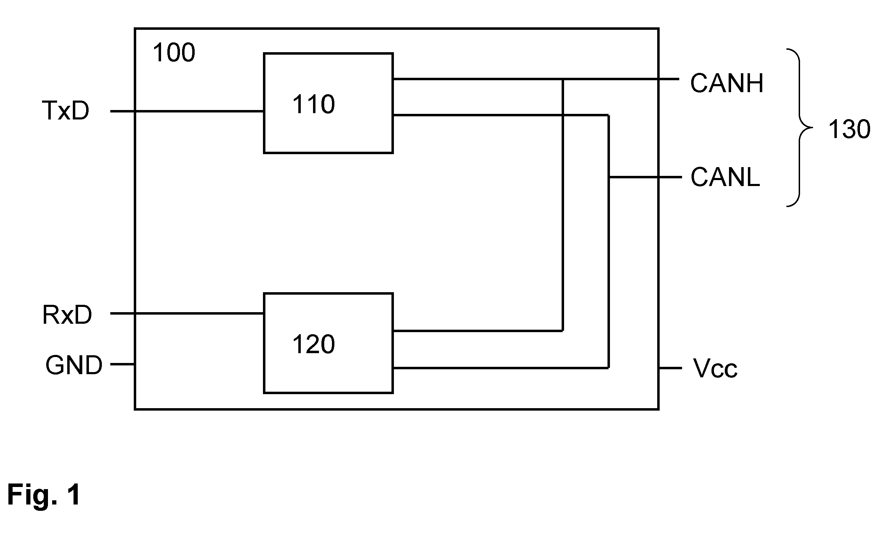

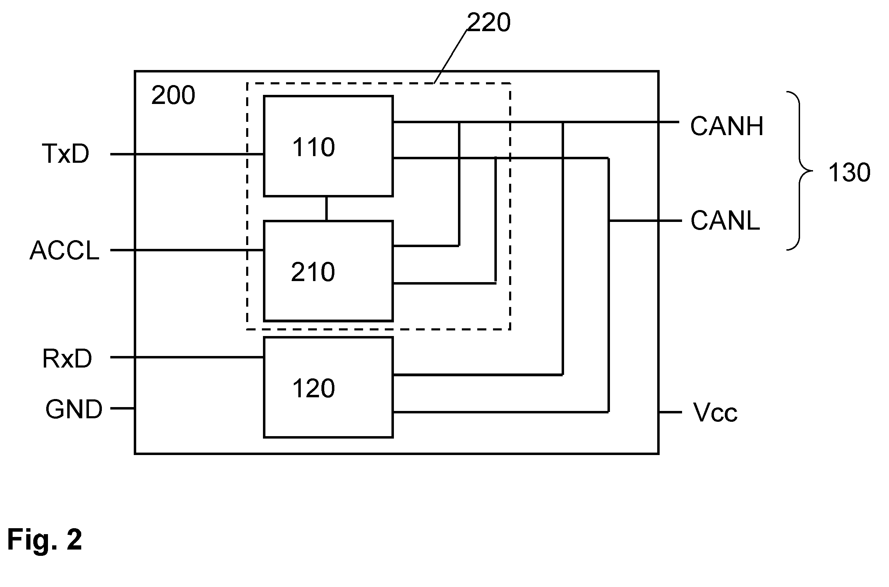

Figur 1 zeigt ein Blockschaltbild einer Vorrichtung 100, wie sie aus dem Stand der Technik bekannt ist. Die Vorrichtung weist eine Schaltung mit Schaltungselementen auf, welche sich in einen Sendeteilschaltung 110 und eine Empfangsteilschaltung 120 unterteilen lässt. Die Sende- und Empfangsteilschaltung können miteinander in Verbindung stehen oder auch gemeinsame Schaltungselemente aufweisen. Die Vorrichtung weist weiterhin die für Transceiver aus dem Stand der Technik üblichen Anschlussmöglichkeiten auf, beispielsweise die Anschlüsse CANH, CANL für den Anschluss an den Kommunikationsbus 130, die Anschlüsse RxD und TxD zum Empfang und Senden von logischen Daten von bzw. an den Kommunikations-Controller, den Anschluss Vcc zur Bereitstellung einer Versorgungsspannung, sowie GND zur Bereitstellung einer Erdung. Weitere mögliche Anschlüsse können gemäß dem Stand der Technik beispielsweise umfassen: Enable-Eingänge, Wakeup-Eingänge, Standby-Eingänge etc. Diese wurden hier der Einfachkeit halber weggelassen. Die Sendeteilschaltung 110 erzeugt basierend auf zumindest dem Sendesignal TxD des Kommunikations-Controllers Ausgangssignale für die Busanschlüsse CANH und CANL. Die Empfangsteilschaltung 120 erzeugt basierend auf zumindest der Differenz der Eingangssignale der Busanschlüsse CANH und CANL ein Empfangssignal RxD für den Kommunikations-Controller. Demgegenüber weist die erfindungsgemäße Vorrichtung 200 in der in Figur 2 dargestellten Ausprägung nun einen zusätzlichen Anschluss ACCL auf, der zur Umschaltung zwischen dem aus dem Stand der Technik bekannten und dem erfindungsgemäß beschleunigten Verhalten dient. Über den Anschluss ACCL wird ein Signal eingelesen, aus dem das Vorliegen einer gültigen Umschaltbedingung durch die Vorrichtung ausgelesen wird. Der Anschluss ist mit einer zusätzlichen Beschleunigungsteilschaltung 210 verbunden, welche außerdem mit der Sendeteilschaltung 110 in Verbindung steht.

Im einfachsten Fall erfolgt die Auswertung des ACCL-Einganges in folgender Weise: Liegt auf dem ACCL-Anschluss eine logische TRUE Bedingung vor, erzeugt die Beschleunigungsteilschaltung 210 basierend auf den von der Sendeteilschaltung 110 empfangenen Signalen Ausgangssignale. Liegt auf dem ACCL-Anschluss eine logische FALSE Bedingung vor, ist die Beschleunigungsteilschaltung 210 inaktiv. Es kann aber auch ein beliebiges anderes Signal oder eine Folge von Signalen festgelegt werden, die am ACCL-Anschluss vorliegen müssen, damit die erfindungsgemäße Vorrichtung eine gültige Umschaltbedingung ableitet. Es ist möglich, dieses Signal konfigurierbar zu gestalten, indem beispielsweise in einem dafür vorgesehenen Register ein Wert abgelegt wird, welchen die Vorrichtung als Vorliegen einer gültigen Umschaltbedingung interpretieren soll.

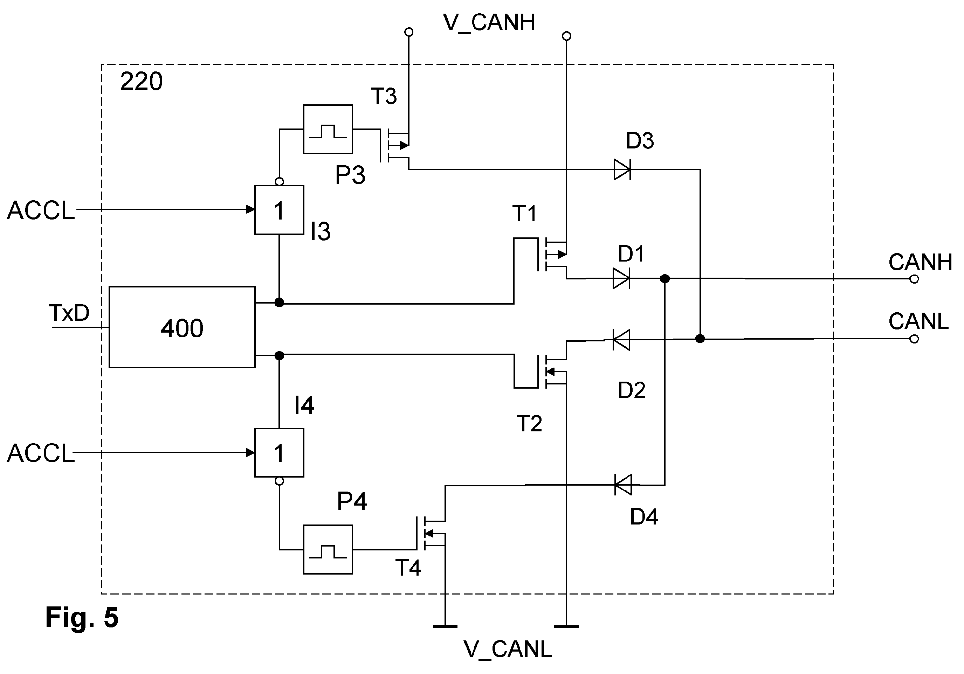

Die Beschleunigungsteilschaltung 210 hat Zugriff auf die Busanschlüsse CANH und CANL, so dass bei Vorliegen einer gültigen Umschaltbedingung die durch die Sendeteilschaltung 110 erzeugten Ausgangssignale mittels der durch die Beschleunigungsteilschaltung 210 erzeugten Ausgangssignale modifiziert werden. Die Kombination von Sendeteilschaltung 110 und Beschleunigungsteilschaltung 210 kann als eine modifizierte Sendeteilschaltung 220 angesehen werden, was in Abbildung 2 durch eine gestrichelte Linie angedeutet ist. Ausführungsbeispiele für diese Sendeteilschaltung 220 werden in den Figuren 5 bis 6 gegeben.

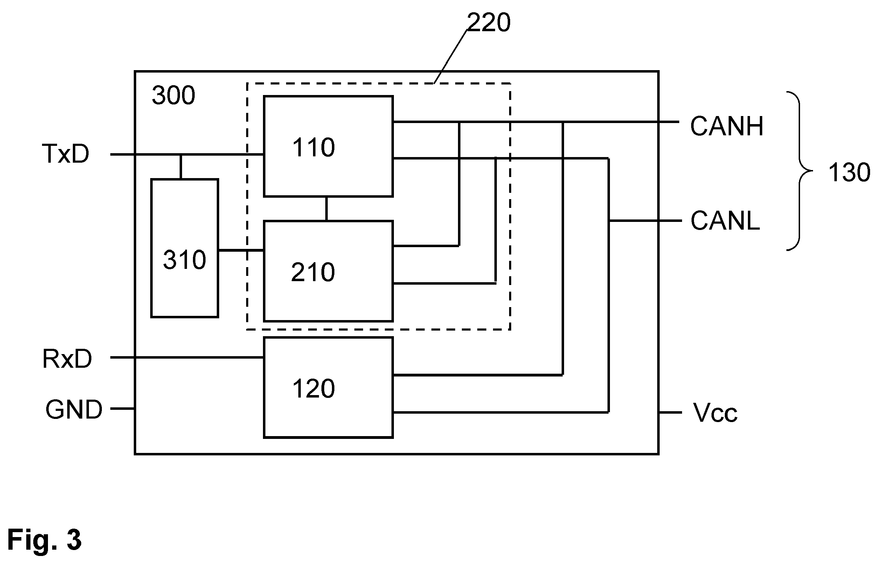

Ein anderes Ausführungsbeispiel einer erfindungsgemäßen Vorrichtung 300 ist in Figur 3 dargestellt. In diesem Fall ist die Vorrichtung ohne den Umschalt-Eingang ACCL aus Figur 2 aufgebaut. Stattdessen weist die Vorrichtung ein Analysemittel 310 auf, welches im dargestellten Fall mit dem Anschluss TxD und der Beschleunigungsteilschaltung 210 verbunden ist und dazu eingerichtet ist, selbständig über die Umschaltung der Vorrichtung in den erfindungsgemäß beschleunigten Modus zu entscheiden.

Das Analysemittel 310 wertet hierzu die Eingangssignale, die die Vorrichtung vom Kommunikations-Controller erreichen, also bevorzugterweise wie in Figur 3 dargestellt das TxD Signal, aus und erzeugt daraus ein Steuersignal für die Beschleunigungsteilschaltung 210. Die Auswertung der vom Kommunikations-Controller empfangenen Datensignale kann beispielsweise die Ermittlung einer zeitlichen Bitlänge innerhalb der empfangenen Signale, die Auswertung einer Kennzeichnung innerhalb der Nachricht, oder auch die Ermittlung eines Umschaltzeitpunkts der zeitlichen Bitlänge innerhalb der Nachricht umfassen. Für das durch das Analysemittel 310 erzeugte Steuersignal gilt analog, was für das Eingangssignal am ACCL-Anschluss im Zusammenhang mit Figur 2 beschrieben wurde. Im einfachsten Fall enthält das Steuersignal eine logische TRUE oder FALSE Bedingung. Erzeugt das Analysemittel 310 als Steuersignal ein logisches TRUE, erzeugt die Beschleunigungsteilschaltung 210 basierend auf den von der Sendeteilschaltung 110 empfangenen Signalen Ausgangssignale. Liegt eine logische FALSE Bedingung vor, ist die Beschleunigungsteilschaltung 210 inaktiv. Abhängig vom Steuersignal, das das Analysemittels 310 erzeugt, werden also die durch die Sendeteilschaltung 110 erzeugten Ausgangssignale mittels der durch die Beschleunigungsteilschaltung 210 erzeugten Ausgangssignale modifiziert, oder nicht. Für das Steuersignal kann, wie bei Figur 2 beschrieben, natürlich auch eine Auswertung erforderlich sein, um das Vorliegen einer Umschaltbedingung abzuleiten. Es kann konfigurierbar ausgeprägt sein.

Es ist auch möglich, dass das Analysemittel 310 sein Ausgangssignal, welches die Beschleunigungsteilschaltung 210 aktiviert, zusätzlich oder alternativ zur Auswertung des Sendesignals TxD beispielsweise durch Auswertung des Empfangssignals RxD und/oder der an den Busanschlüssen CANH, CANL anliegenden Signale gewinnt. Hierzu ist es natürlich erforderlich, dass das Analysemittel durch entsprechende Verbindungen Zugriff auf die auszuwertenden Signale hat. Auch hier kann die Auswertung der empfangenen Datensignale beispielsweise die Ermittlung einer zeitlichen Bitlänge innerhalb der empfangenen Signale, die Auswertung einer Kennzeichnung innerhalb der Nachricht, oder auch die Ermittlung eines Umschaltzeitpunkts der zeitlichen Bitlänge innerhalb der Nachricht umfassen. In dieser Ausführungsform kann die Vorrichtung beispielsweise nicht nur beim Sendeversuch, sondern auch beim Empfang beschleunigter Nachrichten mit reduzierter Bitlänge durch Umschalten in den erfindungsgemäß beschleunigten Modus reagieren. Transceiver aus dem Stand der Technik umfassen häufig eine Weck-Logik, welche die Signale an den Busanschlüssen CANH, CANL analysiert und daraus eine Weckaufforderung ableitet. Vorteilhafterweise kann das Analysemittel 310 in eine derartige Weck-Logik integriert werden, sofern diese in einer erfindungsgemäßen Vorrichtung ebenfalls vorgesehen wird. Die Weckfähigkeit erfindungsgemäßer Vorrichtungen wird weiter unten noch detaillierter ausgeführt.

Alternativ könnte auch auf die Umschaltung der erfindungsgemäßen Vorrichtung ganz verzichtet werden und permanent das erfindungsgemäß beschleunigte Verfahren angewendet werden. Diese ebenfalls nicht näher dargestellte Ausführungsform ergibt sich aus der Vorrichtung 200 der Figur 2 durch Weglassen des ACCL-Anschlusses oder durch Anlegen einer dauerhaften TRUE Bedingung.

Die erfindungsgemäße Vorrichtung 200 beziehungsweise 300 kann derartig ausgelegt werden, dass die Beschleunigungsteilschaltung 210 im Falle eines Wechsels vom dominanten zum rezessiven Buspegels das Einstellen der entsprechend vorgesehenen Spannungsdifferenz, welche gleich oder verschieden von Null sein kann, beschleunigt. Dies ist insbesondere vorteilhaft, da dieser Flankenwechsel in den aus dem Stand der Technik bekannten Vorrichtungen relativ langsam stattfindet, weil die für den rezessiven Pegel vorgesehene Spannungsdifferenz sich ohne die Beschleunigungsteilschaltung nur durch einen Entladestrom, der über Abschlusswiderstände an den Signalleitung fließt, einstellt.

In einer abweichenden Ausführungsform kann eine erfindungsgemäße Vorrichtung aber auch so ausgelegt sein, dass zusätzlich oder ausschließlich beim Wechsel vom rezessiven zum dominanten Buspegel das Einstellen der Spannungsdifferenz beschleunigt wird. Hierfür kann entweder eine weitere Beschleunigungsteilschaltung 211 vorgesehen werden, oder es kann das Verhalten mindestens einer der Teilschaltungen 110 und 210 dahingehend modifiziert werden, dass diese abhängig von der Umschaltung den für das Einstellen des dominanten Buspegels notwendigen Strom stärker treibt. Es kann für diesen Fall auch gegenüber der Vorrichtung 200 ein zusätzlicher Umschaltungseingang ACCL2 für die modifizierte Sendeteilschaltung 220 oder gegenüber der Vorrichtung 300 eine separate Verbindung zwischen dem Analysemittel 310 und der modifizierten Sendeteilschaltung 220 vorgesehen werden, um separat die Beschleunigung für die beiden Richtungen des Flankenwechsels aktivieren zu können.

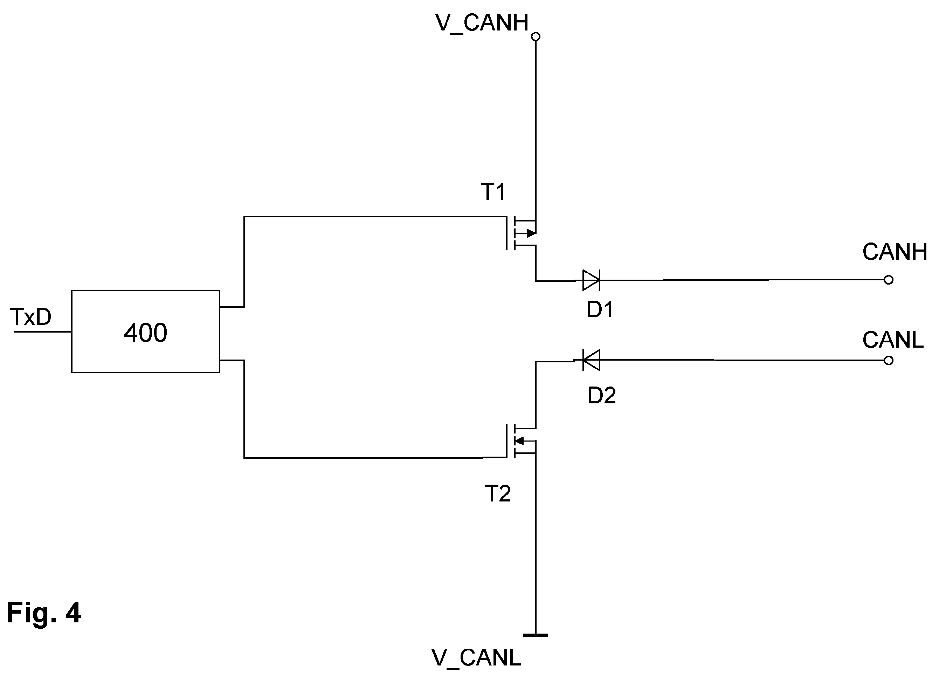

In Figur 4 ist ein Beispiel des schematischen Aufbaus der Sendeteilschaltung 110 einer Vorrichtung nach dem Stand der Technik dargestellt. Sie besteht im Wesentlichen aus einem Treiberbaustein 400, dessen zwei Ausgänge jeweils über einen Transistor T1 oder T2 die Pegel der zwei Busleitungen CANH, CANL steuern. Das Sendesignal TxD wird vom Treiberbaustein 400 in geeigneter Weise modifiziert, so dass bei einer anliegenden logischen Null die nachgeschaltete Transistorschaltung den Busanschluss CANH auf das Potenzial V_CANH und den Busanschluss CANL auf das Potenzial V_CANL zieht (dominanter Buspegel), während bei einer anliegenden logischen Eins die nachgeschaltete Transistorschaltung T1, T2 in Verbindung mit den Dioden D1 und D2 sperrt und die Busleitungen über die Abschlusswiderstände (nicht dargestellt) an den Leitungsenden wieder ihr Potenzial zu einem rezessiven Puspegel mit einer Differenzspannung von näherungsweise Null ausgleichen. In einer alternativen Ausprägung aus dem Stand der Technik ("low-speed-CAN") liegen im rezessiven Fall die Busleitungen auf einer von Null signifikant abweichenden Differenzspannung.

In Figur 5 ist demgegenüber ein Ausführungsbeispiel einer modifizierten Sendeteilschaltung 220 schematisch dargestellt, bei welcher die ursprüngliche Sendeteilschaltung 110 durch die weiteren Schaltungselemente der Beschleunigungsteilschaltung 210 ergänzt ist. Die weiteren Schaltungselemente umfassen an jedem Ausgang des Treiberbausteins jeweils ein durch das Umschaltsignal ACCL schaltbares, invertierendes Schaltungselement I3 und I4, sowie nachgeschaltete, beispielsweise flankengetriggerte Pulsgeneratoren P3 und P4. Anstelle von flankengetriggerten Pulsgeneratoren können natürlich auch andere dem Fachmann bekannte, wie etwa schwellwertgetriggerte Pulsgeneratoren zu Einsatz kommen. Der Ausgangspuls wird nach einem Flankenwechsel von logisch Null nach logisch Eins (dominant zu rezessiv) am Eingang des Pulsgenerators getriggert. Die Ausgänge der Pulsgeneratoren liefern die Gate-Spannung für Transistoren T3, T4, welche die Busleitungen CANH, CANL über Dioden D3 und D4 mit den Potenzialquellen V_CANH und V_CANL verbinden.

Liegt eine Aktivierung durch das Umschaltsignal ACCL (beziehungsweise das vom Analysemittel 310 kommende Umschaltsignal) an den Schaltungselementen I3 und I4 vor, liefern diese ein gegenüber dem Eingangssignal invertiertes Ausgangssignal an die im vorliegenden Beispiel flankengetriggerten Pulsgeneratoren P3 und P4, welche durch Anlegen einer geeigneten Gate-Spannung kurzzeitig die Transistoren T3, T4 niederohmig schalten. Liegt keine Aktivierung vor, ist die gesamte Schaltung inaktiv und beeinflusst die Buspegel nicht.

Der Schaltungsaufbau führt also dazu, dass dann, wenn der Transistor T1 durch das Signal des Treiberbausteins 400 hochohmig geschalten wird, der Transistor T3 kurzzeitig niederohmig wird, und analog dann, wenn der Transistor T2 hochohmig geschalten wird, der Transistor T4 kurzzeitig niederohmig wird. Auf diese Weise beeinflusst die Beschleunigungsteilschaltung 210 den Pegel der Busleitungen CANH, CANL. Insbesondere ist die Kombination aus Transistoren T3, T4 und Dioden D3, D4 so gewählt, dass die Leitungspegel genau umgekehrt getrieben werden, wie durch die Sendeteilschaltung 110.

Durch die Invertierung des Ausgangssignals des Treiberbausteines in Kombination mit der Pulsweitenbegrenzung wird das gewünschte Verhalten erzielt, dass bei einem Wechsel vom dominanten zum rezessiven Buszustand, während die Schaltung aus T1 und D1, beziehungsweise T2 und D2 sperrt, für eine kurze Zeit die Busleitung CANH über den Transistor T4 und die Diode D4 mit dem Potenzial V_CANL niederohmig verbunden und die Busleitung CANL über den Transistor T3 und die Diode D3 mit dem Potenzial V_CANH niederohmig verbunden wird. Bei geeigneter Wahl der Pulsdauer wird durch die Schaltung das Einstellen des rezessiven Buspegels beschleunigt, ohne dass Eigenschaften wie zum Beispiel die Möglichkeit des Überschreibens des rezessiven Buspegels durch andere Steuergeräte im Rahmen der Arbitrierung oder auch bei Erkennen eines Fehlers verloren gehen.

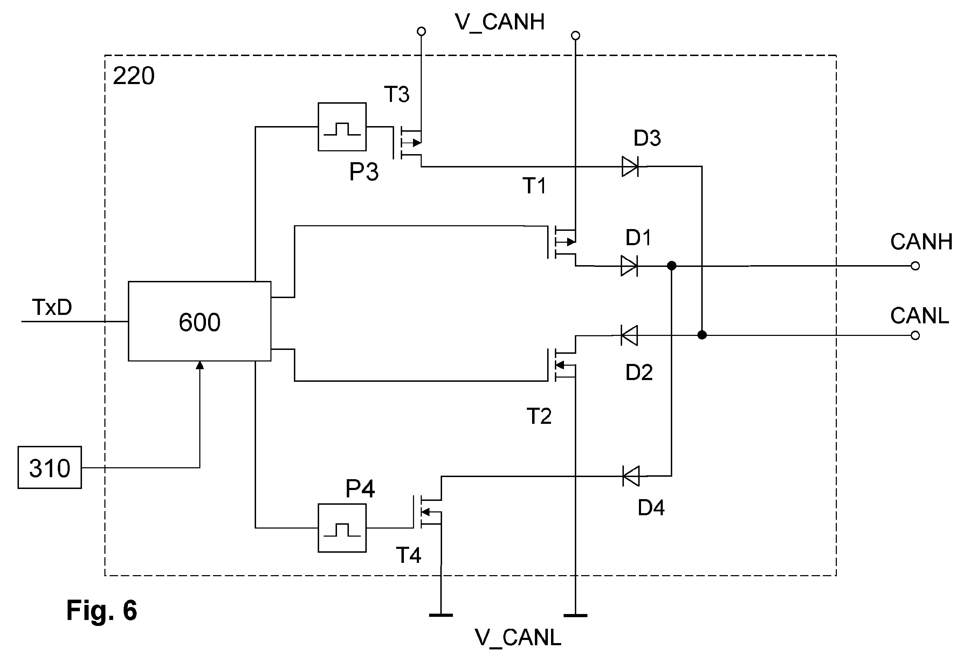

Im umgekehrten Fall, also beim Übergang von rezessivem zu dominantem Buspegel, ändert sich im dargestellten Ausführungsbeispiel aus Figur 5 das Verhalten der Sendeteilschaltung 110 durch das Hinzufügen der beschriebenen Beschleunigungsteilschaltung 210 im Wesentlichen nicht. Während die Transistoren T1, T2 in diesem Fall durch eine geeignete Gate-Spannung niederohmig geschalten werden, wird die Gate-Spannung für T3 und T4 durch Inverter I3, I4 und Pulsgeneratoren P3, P4 auf einem Wert gehalten, der zu einem hochohmigem Verhalten führt, da die Pulsgeneratoren nur durch einen Flankenwechsel von logisch Null zu logisch Eins getriggert werden. Soll beim Übergang von rezessivem zu dominantem Buspegel ebenfalls eine Beschleunigung erzielt werden, kann beispielsweise der Treiberbaustein modifiziert werden, wie im Folgenden in Zusammenhang mit Figur 6 erläutert.

In Figur 6 ist dargestellt, wie das erfindungsgemäße Verhalten auch durch Einsatz eines geeignet modifizierten Treiberbausteins 600 erzielt werden kann. Der Treiberbaustein wird durch das vom Analysemittel 310 kommende Umschaltsignal dahingehend aktiviert, dass er sein Verhalten auf das erfindungsgemäß beschleunigte Verhalten umstellt. Er stellt beispielsweise die invertierten Ausgänge der Beschleunigungsteilschaltung 210 zur Verfügung, welche mittels der beispielsweise flanken- oder schwellwertgetriggerten Pulsgeneratoren P3, P4 die kurzen Gate-Spannungen an die Transistoren T3, T4 anlegt. In der hier dargestellten Variante sind die Pulsgeneratoren noch separat dargestellt. In einer nicht dargestellten Ausführungsform könnten auch diese in den Treiberbaustein integriert werden, so dass der Treiberbaustein direkt durch Bereitstellung einer entsprechenden Gate-Spannungen kurzzeitig die Transistoren T3 und T4 niederohmig macht. Weiterhin könnte selbstverständlich, abweichend von Figur 6, die Umschaltung auch durch das externe Umschaltsignal ACCL erfolgen. Außerdem kann der modifizierte Treiberbaustein 600 abhängig vom Umschaltsignal zusätzlich oder ausschließlich die Ausgangsspannungen, welche die Transistoren T1 und T2 betreffen, anpassen, so dass der Wechsel vom rezessiven zum dominanten Buspegel beschleunigt wird. Wie schon früher angesprochen, kann letzteres Verhalten auch unabhängig vom zuerst beschriebenen Verhalten durch ein separates Umschaltsignal aktiviert werden.

In den beschriebenen Ausführungsformen wurde davon ausgegangen, dass die an den Transistoren T3, T4 anliegende Gatespannungen, welche von den Pulsgeneratoren P3, P4 bereitgestellt werden, geeignet kurz sind. Dies kann durch eine entsprechende Voreinstellung beziehungsweise Vorsteuerung erreicht werden. Es ist aber auch möglich, dass Erfassungsmittel in der Vorrichtung vorgesehen werden, die beispielsweise die Dauer des Anliegens der Gatespannung, die übertragene Ladungsmenge, die Stromstärke, die elektrische Leistung oder die aufgebrachte Energie des von den Potenzialquellen V_CANH, V_CANL zu den Busleitungen CANH, CANL geflossenen Stroms erfassen, und dass abhängig von der oder den erfassten Größen die Dauer des Anlegens der Gatespannungen an den Transistoren T3 und T4 eingestellt wird beziehungsweise bei Erreichen einer Schwelle die Spannung unterbrochen wird. Weitere Ausführungsformen können vorsehen, dass die auf den Busleitungen CANH, CANL liegenden Spannungs-Potenziale ermittelt werden, beispielsweise an den Dioden D3 und D4, und abhängig von diesen Werten die Pulsweite eingestellt wird beziehungsweise bei Erreichen einer Schwelle die Spannung unterbrochen wird.

Die erfindungsgemäße Vorrichtung kann darüber hinaus in einer bevorzugten Ausführungsform einen weiteren Ausgang umfassen, über welchen der aktuell vorliegende Modus (beschleunigt/ nicht beschleunigt) beispielsweise an den Kommunikations-Controller oder andere Schaltungselemente zurückgemeldet wird. Diese Rückmeldung kann vorteilhafterweise dazu genutzt werden, um sicherzustellen, dass der Kommunikations-Controller nur dann beschleunigte Daten über den Anschluss TxD an die Vorrichtung übermittelt, wenn die Vorrichtung erfolgreich in den beschleunigten Modus umgeschaltet wurde.

Die erfindungsgemäße Vorrichtung kann des weiteren in einer bevorzugten Ausführungsform dafür eingerichtet sein, durch Auswertung der auf den Busleitungen CANH, CANL anliegenden Signale selbst aufgeweckt beziehungsweise aktiviert werden zu können, sowie einen Weckvorgang bei angeschlossenen Schaltungselementen, beispielsweise dem Kommunikationscontroller oder einem Mikroprozessor einleiten zu können. Vorrichtungen wie die in der vorliegenden Erfindung beschriebene weisen üblicherweise neben dem aktiven Zustand und dem abgeschalteten Zustand mindestens einen weiteren Zustand, den Schlaf-Betriebszustand auf, in welchem die Stromaufnahme weitestgehend minimiert ist. Zum Aufwecken aus dem Schlaf-Zustand kann ein separater Eingang an der Vorrichtung vorgesehen sein, welcher mit einer separaten Weck-Leitung verbunden ist. Es kann aber auch über die Busleitungen CANH, CANL ein Weckvorgang eingeleitet werden.

Im Schlaf-Zustand beobachtet die erfindungsgemäße Vorrichtung im einfachsten Fall den Buszustand und ein Weckvorgang wird ausgeführt, wenn das Auftreten eines dominanten Buspegels festgestellt wird. Die Vorrichtung wird dann einerseits selbst aktiv, andererseits kann sie die angeschlossenen Schaltungselemente, beispielsweise Kommunikationscontroller oder Mikroprozessor, durch geeignete Signale aktivieren. Die Vorrichtung kann auch so ausgeprägt sein, dass sie im Schlaf-Zustand noch die Fähigkeit behält, auf dem Bus anliegende Nachrichten zu analysieren, und dass sie nur bei Empfang einer vorgegebenen Nachricht oder einer Nachricht mit einer vorgegebenen Adresse oder einer Nachricht mit einer bestimmten Kennzeichnung, beispielsweise innerhalb des Datenfeldes, den Schlaf-Zustand verlässt. Es ist auch eine zweistufig ausgelegte Vorrichtung möglich, bei welchem die Vorrichtung zunächst bei Feststellen eines dominanten Buspegels in einen Zwischen-Zustand wechselt, in dem sie beispielsweise durch Start eines hierfür vorgesehenen Oszillators die Fähigkeit entwickelt, auf dem Bus anliegende Nachrichten zu analysieren. Bei Erkennen einer vorgegebenen Nachricht oder einer Nachricht mit einer vorgegebenen Adresse oder einer Nachricht mit einer bestimmten Kennzeichnung wird die Vorrichtung dann vollständig aufgeweckt beziehungsweise aktiviert. Weiterhin besteht die Möglichkeit, dass zusätzlich oder ausschließlich die Aktivierung der angeschlossenen Schaltungselemente wie Kommunikationscontroller oder Mikroprozessor von festgelegten Kennzeichen, der Adresse oder dem Inhalt der auf dem Bus empfangenen Botschaft abhängig gemacht wird. Auf diese Weise ist ein selektives Wecken von Busteilnehmern über geeignete Nachrichten realisierbar.

In den erfindungsgemäßen Vorrichtungen ist für das selektive Aufwecken, sofern es Teile der auf dem Bus anliegenden Nachricht betrifft, zu beachten, dass die Vorrichtung auch im Schlaf-Zustand die beschleunigten Nachrichtenabschnitte erkennen und gegebenenfalls dekodieren können muss.

## Patentansprüche

1. Vorrichtung (200) zum Anschluss eines Busteilnehmers an einen zweidrahtigen Kommunikationsbus (130),
wobei der Busteilnehmer unter Nutzung der Vorrichtung Nachrichten, welche als Folge von dominanten und rezessiven Buspegeln auf den Busleitungen (CANH, CANL) dargestellt werden, an weitere am Bus angeschlossene Busteilnehmer senden kann und von diesen empfangen kann,
wobei die Vorrichtung erste Mittel (110) umfasst, um einen dominanten Buspegel in Form einer ersten vorgegebenen Spannungsdifferenz zwischen den beiden Busleitungen durch Treiben eines ersten elektrischen Stromes einzustellen,
und die Vorrichtung geeignet ist, dass der rezessive Buspegel sich als zweite vorgegebene, nicht notwendigerweise von Null verschiedene Spannungsdifferenz zwischen den beiden Busleitungen zumindest teilweise durch Fließen eines Entladestromes über mit den Busleitungen verbundene Abschlusswiderstände einstellt,
**dadurch gekennzeichnet, dass** die Vorrichtung mindestens ein weiteres Mittel (210) umfasst, um die Einstellung mindestens eines der Buspegel durch Treiben mindestens eines geeigneten weiteren elektrischen Stromes zu beschleunigen,
wobei die Beschleunigung bei Vorliegen einer vorgegebenen oder vorgebbaren Umschaltbedingung ausgeführt wird.

2. Vorrichtung gemäß Anspruch 1,
**dadurch gekennzeichnet, dass** mindestens eines der weiteren Mittel (210) dazu geeignet ist, die Einstellung des rezessiven Buspegels durch Treiben eines zweiten elektrischen Stromes parallel zu dem Entladestrom über die Abschlusswiderstände zu beschleunigen.

3. Vorrichtung gemäß Anspruch 2,
**dadurch gekennzeichnet, dass** der zweite elektrische Strom bis zum Erreichen eines Schwellwertes für die Spannungsdifferenz und/oder für eine vorgebbare Zeit und/oder bis zum Erreichen eines Schwellwertes für die elektrische Leistung getrieben wird.

4. Vorrichtung gemäß einem der Ansprüche 1 bis 3,
**dadurch gekennzeichnet, dass** mindestens eines der weiteren Mittel (210) dazu geeignet ist, die Einstellung des dominanten Buspegels durch Veränderung der Stromstärke des ersten elektrischen Stromes oder durch Treiben eines zusätzlichen elektrischen Stromes parallel zu dem ersten elektrischen Strom zu modifizieren.

5. Vorrichtung gemäß einem der Ansprüche 1 bis 4,
**dadurch gekennzeichnet, dass** für das Empfangen der Umschaltbedingung ein geeigneter Eingang (ACCL) an der Vorrichtung vorgesehen ist.

6. Vorrichtung gemäß einem der Ansprüche 1 bis 4,
**dadurch gekennzeichnet, dass** die Umschaltbedingung durch in der Vorrichtung vorgesehene Analysemittel (310) durch Auswertung der Datensignale ermittelt wird, die die Vorrichtung von einem Kommunikations-Controller oder einem Mikrocontroller zum Versenden erhält.

7. Vorrichtung gemäß einem der Ansprüche 1 bis 4,
**dadurch gekennzeichnet, dass** die Umschaltbedingung von der Vorrichtung durch die Auswertung der von den Busleitungen empfangenen Datensignale ermittelt wird.

8. Vorrichtung gemäß Anspruch 6 oder 7,
**dadurch gekennzeichnet, dass** die Auswertung zumindest die Ermittlung eines Umschaltzeitpunkts innerhalb einer Nachricht oder die Auswertung einer Kennzeichnung innerhalb einer Nachricht oder die Ermittlung einer zeitlichen Bitlänge umfasst.

9. Vorrichtung gemäß einem der vorangegangenen Ansprüche,
**dadurch gekennzeichnet, dass** ein geeigneter Ausgang an der Vorrichtung vorgesehen ist, um dem ansteuernden Kommunikations-Controller oder Mikrocontroller die Information zurückzumelden, ob die Vorrichtung zum beschleunigten Einstellen eines Buspegels umgeschaltet ist.

10. Vorrichtung gemäß einem der vorangegangenen Ansprüche,
**dadurch gekennzeichnet, dass** die Vorrichtung einen ersten Zustand mit reduziertem Energiebedarf einnehmen kann, aus welchem die Vorrichtung durch eine beliebige oder vorgegebene oder vorgebbare Nachricht in einen zweiten, aktiven Zustand überführt werden kann.

11. Vorrichtung gemäß Anspruch 10,
**dadurch gekennzeichnet, dass** die Vorrichtung im ersten Zustand dazu eingerichtet ist, empfangene Nachrichten unabhängig davon, ob sie beschleunigt oder nicht beschleunigt gesendet werden, als eine vorgegebene oder vorgebbare, an sie gerichtete Weck-Nachricht zu erkennen und bei deren Empfang selbst den zweiten Zustand einzunehmen und verbundene Komponenten zu aktivieren.

12. Vorrichtung gemäß Anspruch 10,
**dadurch gekennzeichnet, dass** die Vorrichtung im ersten Zustand dazu eingerichtet ist, bei Empfang beliebiger Nachrichten einen dritten Zustand einzunehmen, in welchem sie nachfolgend empfangene Nachrichten unabhängig davon, ob sie beschleunigt oder nicht beschleunigt gesendet werden, als eine vorgegebene oder vorgebbare, an sie gerichtete Weck-Nachricht erkennen kann, und dass die Vorrichtung im dritten Zustand dazu eingerichtet ist, bei Empfang einer an sie gerichteten Weck-Nachricht selbst den zweiten Zustand einzunehmen und verbundene Komponenten zu aktivieren.

13. Verfahren zum Übertragen von Nachrichten zwischen Busteilnehmern über einen zweidrahtige Kommunikationsbus (130),
wobei die Nachrichten als Folge von dominanten und rezessiven Buspegeln auf den Busleitungen (CANH, CANL) dargestellt werden,
wobei der dominante Buspegel in Form einer ersten vorgegebenen Spannungsdifferenz zwischen den beiden Busleitungen durch Treiben eines ersten elektrischen Stromes eingestellt wird,
wobei der rezessive Buspegel sich als zweite vorgegebene, nicht notwendigerweise von Null verschiedene Spannungsdifferenz zwischen den beiden Busleitungen zumindest teilweise durch Fließen eines Entladestromes über mit den Busleitungen verbundene Abschlusswiderstände einstellt,
**dadurch gekennzeichnet, dass** die Einstellung mindestens eines der Buspegel durch Treiben mindestens eines geeigneten weiteren elektrischen Stromes beschleunigt wird,
wobei die Beschleunigung bei Vorliegen einer vorgegebenen oder vorgebbaren Umschaltbedingung ausgeführt wird.

14. Verfahren gemäß Anspruch 13,
**dadurch gekennzeichnet, dass** die Einstellung des rezessiven Buspegels durch Treiben eines zweiten elektrischen Stromes parallel zu dem Entladestrom über die Abschlusswiderstände beschleunigt wird.

15. Verfahren gemäß Anspruch 14,
**dadurch gekennzeichnet, dass** der zweite elektrische Strom bis zum Erreichen eines Schwellwertes für die Spannungsdifferenz und/oder für eine vorgebbare Zeit und/oder bis zum Erreichen eines Schwellwertes für die elektrische Leistung getrieben wird.

16. Verfahren gemäß einem der Ansprüche 13 bis 15,
**dadurch gekennzeichnet, dass** die Einstellung des dominanten Buspegels durch Veränderung der Stromstärke des ersten elektrischen Stromes oder durch Treiben eines zusätzlichen elektrischen Stromes parallel zu dem ersten elektrischen Strom modifiziert wird.

17. Verfahren gemäß einem der Ansprüche 13 bis 16,
**dadurch gekennzeichnet, dass** dem ansteuernden Kommunikations-Controller oder Mikrocontroller die Information zurückgemeldet wird, ob das Verfahren zum beschleunigten Einstellen eines Buspegels aktiv ist.

18. Verfahren gemäß einem der Ansprüche 13 bis 17,
**dadurch gekennzeichnet, dass** Busteilnehmer einen ersten Zustand mit reduziertem Energiebedarf einnehmen können, aus welchem sie durch eine beliebige oder vorgegebene oder vorgebbare Nachricht in einen zweiten, aktiven Zustand überführt werden können.

19. Verfahren gemäß Anspruch 18,
**dadurch gekennzeichnet, dass** Busteilnehmer im ersten Zustand empfangene Nachrichten unabhängig davon, ob sie beschleunigt oder nicht beschleunigt gesendet werden, als eine vorgegebene oder vorgebbare, an sie gerichtete Weck-Nachricht erkennen und bei deren Empfang den zweiten Zustand einnehmen.

20. Verfahren gemäß Anspruch 19,
**dadurch gekennzeichnet, dass** Busteilnehmer im ersten Zustand bei Empfang beliebiger Nachrichten einen dritten Zustand einnehmen, in welchem sie nachfolgend empfangene Nachrichten unabhängig davon, ob sie beschleunigt oder nicht beschleunigt gesendet werden, als eine vorgegebene oder vorgebbare, an sie gerichtete Weck-Nachricht erkennen können, und dass Busteilnehmer im dritten Zustand bei Empfang einer an sie gerichteten Weck-Nachricht den zweiten Zustand einnehmen.

## Claims

1. Apparatus (200) for connecting a bus subscriber to a two-wire communication bus (130),
the bus subscriber being able to transmit messages, which are represented as a sequence of dominant and recessive bus levels on the bus lines (CANH, CANL), to further bus subscribers connected to the bus and being able to receive messages from said bus subscribers using the apparatus,
the apparatus comprising first means (110) in order to set a dominant bus level in the form of a first predefined voltage difference between the two bus lines by driving a first electrical current,
and the apparatus being suitable such that the recessive bus level is set as a second predefined voltage difference between the two bus lines, which is not necessarily different from zero, at least partially by virtue of a discharge current flowing across terminating resistors connected to the bus lines,
**characterized in that** the apparatus comprises at least one further means (210) in order to accelerate the setting of at least one of the bus levels by driving at least one suitable further electrical current,
the acceleration being carried out when a predefined or predefinable changeover condition is present.

2. Apparatus according to Claim 1,
**characterized in that** at least one of the further means (210) is suitable for accelerating the setting of the recessive bus level by driving a second electrical current across the terminating resistors in a manner parallel to the discharge current.

3. Apparatus according to Claim 2,
**characterized in that** the second electrical current is driven until a threshold value for the voltage difference is reached and/or for a predefinable time and/or until a threshold value for the electrical power is reached.

4. Apparatus according to one of Claims 1 to 3,
**characterized in that** at least one of the further means (210) is suitable for modifying the setting of the dominant bus level by changing the current intensity of the first electrical current or by driving an additional electrical current in a manner parallel to the first electrical current.

5. Apparatus according to one of Claims 1 to 4,
**characterized in that** a suitable input (ACCL) is provided on the apparatus for receiving the changeover condition.

6. Apparatus according to one of Claims 1 to 4,
**characterized in that** the changeover condition is determined by analytical means (310) provided in the apparatus by evaluating the data signals which are received by the apparatus from a communication controller or a microcontroller for transmission.

7. Apparatus according to one of Claims 1 to 4,
**characterized in that** the changeover condition is determined by the apparatus by evaluating the data signals received from the bus lines.

8. Apparatus according to Claim 6 or 7,
**characterized in that** the evaluation comprises at least the determination of a changeover time inside a message or the evaluation of an identification inside a message or the determination of a temporal bit length.

9. Apparatus according to one of the preceding claims,
**characterized in that** a suitable output is provided on the apparatus in order to report back the information relating to whether the apparatus has been changed over for the accelerated setting of a bus level to the controlling communication controller or microcontroller.

10. Apparatus according to one of the preceding claims,
**characterized in that** the apparatus can assume a first state with a reduced energy requirement, from which the apparatus can be transferred to a second, active state by means of any desired or predefined or predefinable message.

11. Apparatus according to Claim 10,
**characterized in that** the apparatus in the first state is set up to identify received messages as a predefined or predefinable wake-up message addressed to it, irrespective of whether the messages are transmitted in accelerated or non-accelerated form, and to itself assume the second state and to activate connected components upon receiving said wake-up message.

12. Apparatus according to Claim 10,
**characterized in that** the apparatus in the first state is set up, upon receiving any desired messages, to assume a third state in which it can then identify received messages as a predefined or predefinable wake-up message addressed to it, irrespective of whether the messages are transmitted in accelerated or non-accelerated form, and **in that** the apparatus in the third state is set up to itself assume the second state and to activate connected components upon receiving a wake-up message addressed to it.

13. Method for transmitting messages between bus subscribers via a two-wire communication bus (130),
the messages being represented as a sequence of dominant and recessive bus levels on the bus lines (CANH, CANL),
the dominant bus level being set in the form of a first predefined voltage difference between the two bus lines by driving a first electrical current,
the recessive bus level being set as a second predefined voltage difference between the two bus lines, which is not necessarily different from zero, at least partially by virtue of a discharge current flowing across terminating resistors connected to the bus lines,
**characterized in that** the setting of at least one of the bus levels is accelerated by driving at least one suitable further electrical current,
the acceleration being carried out when a predefined or predefinable changeover condition is present.

14. Method according to Claim 13,
**characterized in that** the setting of the recessive bus level is accelerated by driving a second electrical current across the terminating resistors in a manner parallel to the discharge current.

15. Method according to Claim 14,
**characterized in that** the second electrical current is driven until a threshold value for the voltage difference is reached and/or for a predefinable time and/or until a threshold value for the electrical power is reached.

16. Method according to one of Claims 13 to 15,
**characterized in that** the setting of the dominant bus level is modified by changing the current intensity of the first electrical current or by driving an additional electrical current in a manner parallel to the first electrical current.

17. Method according to one of Claims 13 to 16,
**characterized in that** the information relating to whether the method for the accelerated setting of a bus level is active is reported back to the controlling communication controller or microcontroller.

18. Method according to one of Claims 13 to 17,
**characterized in that** bus subscribers can assume a first state with a reduced energy requirement, from which they can be transferred to a second, active state by means of any desired or predefined or predefinable message.

19. Method according to Claim 18,
**characterized in that** bus subscribers in the first state identify received messages as a predefined or predefinable wake-up message addressed to them, irrespective of whether the messages are transmitted in accelerated or non-accelerated form, and assume the second state upon receiving said wake-up message.

20. Method according to Claim 19,
**characterized in that** bus subscribers in the first state, upon receiving any desired messages, assume a third state in which they can then identify received messages as a predefined or predefinable wake-up message addressed to them, irrespective of whether the messages are transmitted in accelerated or non-accelerated form, and **in that** bus subscribers in the third state assume the second state upon receiving a wake-up message addressed to them.

## Revendications

1. Ensemble (200) permettant de raccorder un participant à un bus de communication (130) à deux fils, le participant pouvant en recourant à l'ensemble envoyer à d'autres participants raccordés au bus des messages présentés sur les conducteurs de bus (CANH, CANL) sous la forme de niveaux dominants et de niveaux récessifs du bus et recevant ces messages de ces autres participants,
l'ensemble comportant des premiers moyens (110) permettant d'établir sur le bus un niveau dominant qui présente la forme d'une première différence de tension prédéterminée entre les deux conducteurs du bus, par pilotage d'un premier courant électrique,
l'ensemble permettant d'établir sur le bus un niveau récessif en tant que deuxième différence de tension prédéterminée, non nécessairement différente de zéro, entre les deux conducteurs du bus, au moins en partie par écoulement d'un courant de décharge à travers des résistances de découplage raccordées au conducteur de bus,
**caractérisé en ce que**
l'ensemble comporte au moins un troisième moyen (210) qui permet d'accélérer l'établissement d'au moins l'un des niveaux sur le bus par pilotage d'au moins un autre courant électrique approprié, l'accélération étant exécutée en cas de présence d'une condition prédéterminée ou prédéterminable de commutation.

2. Ensemble selon la revendication 1, **caractérisé en ce qu'**au moins l'un des autres moyens (210) convient pour accélérer l'établissement du niveau récessif sur le bus par pilotage d'un deuxième courant électrique parallèlement au courant de décharge à travers les résistances de découplage.

3. Ensemble selon la revendication 2, **caractérisé en ce que** le deuxième courant électrique est piloté jusqu'à l'atteinte d'une valeur de seuil de la différence de tension pendant une durée prédéterminée et/ou jusqu'à l'atteinte d'une valeur de seuil de la puissance électrique.

4. Ensemble selon l'une des revendications 1 à 3, **caractérisé en ce qu'**au moins l'un des autres moyens (210) convient pour modifier l'établissement du niveau dominant sur le bus par modification de l'intensité du premier courant électrique ou par pilotage d'un courant électrique supplémentaire parallèlement au premier courant électrique.

5. Ensemble selon l'une des revendications 1 à 4, **caractérisé en ce qu'**une entrée appropriée (ACCL) est prévue sur le dispositif pour recevoir la condition de commutation.

6. Ensemble selon l'une des revendications 1 à 4, **caractérisé en ce que** la condition de commutation est déterminée par des moyens d'analyse (310) prévus dans l'ensemble pour évaluer des signaux de données, que le dispositif reçoit d'un contrôleur de communication ou d'un microcontrôleur en vue de leur émission.

7. Ensemble selon l'une des revendications 1 à 4, **caractérisé en ce que** la condition de commutation est déterminée par le dispositif par évaluation des signaux de données reçus des conducteurs de bus.

8. Ensemble selon les revendications 6 ou 7, **caractérisé en ce que** l'évaluation comporte au moins la détermination d'un instant de commutation à l'intérieur d'un message ou l'évaluation d'une caractéristique à l'intérieur d'un message ou la détermination d'une durée de bit.

9. Ensemble selon l'une des revendications précédentes, **caractérisé en ce qu'**une sortie appropriée est prévue sur le dispositif pour renvoyer au contrôleur de communication ou au microcontrôleur de commande l'information indiquant si le dispositif a été commuté en établissement accéléré d'un niveau sur le bus.

10. Ensemble selon l'une des revendications précédentes, **caractérisé en ce que** le dispositif peut prendre un premier état à besoin d'énergie réduit, depuis lequel le dispositif peut être transféré en un deuxième état actif par un message quelconque, prédéterminé ou prédéterminable.

11. Ensemble selon la revendication 10, **caractérisé en ce que** le dispositif est conçu pour détecter les messages reçus, qu'ils soient envoyés de manière accélérée ou non accélérée, en tant que message d'éveil prédéterminé ou prédéterminable qui lui est envoyé et, lors de leur réception, de prendre lui-même le deuxième état ou activer des composants qui lui sont raccordés.

12. Ensemble selon la revendication 10, **caractérisé en ce que** le dispositif est conçu pour, dans le premier état, lors de la réception de messages quelconques, prendre un troisième état dans lequel il peut détecter les messages reçus ensuite, que ces derniers aient été envoyés de manière accélérée ou non accélérée, en tant que message prédéterminé ou prédéterminable de réveil qui lui est envoyé et **en ce que** le dispositif est conçu pour, dans le troisième état, prendre de lui-même le deuxième état ou activer des composants qui lui sont reliés lors de la réception d'un message de réveil qui lui est envoyé.

13. Procédé de transmission de messages entre des participants à un bus de communication (130) à deux fils, les messages étant présentés sur les conducteurs de bus (CANH, CANL) sous la forme de niveaux dominants et de niveaux récessifs du bus,
le niveau dominant qui présente la forme d'une première différence de tension prédéterminée entre les deux conducteurs du bus étant établi par pilotage d'un premier courant électrique,
le niveau récessif s'établissant en tant que deuxième différence de tension prédéterminée, non nécessairement différente de zéro, entre les deux conducteurs du bus, au moins en partie par écoulement d'un courant de décharge à travers des résistances de découplage raccordées au conducteur de bus,
**caractérisé en ce que**
l'établissement d'au moins l'un des niveaux sur le bus est accéléré par pilotage d'au moins un autre courant électrique approprié, l'accélération étant exécutée en cas de présence d'une condition prédéterminée ou prédéterminable de commutation.

14. Procédé selon la revendication 13, **caractérisé en ce que** l'établissement du niveau récessif sur le bus est accéléré par pilotage d'un deuxième courant électrique parallèlement au courant de décharge à travers les résistances de découplage.

15. Procédé selon la revendication 14, **caractérisé en ce que** le deuxième courant électrique est piloté jusqu'à l'atteinte d'une valeur de seuil de la différence de tension pendant une durée prédéterminée et/ou jusqu'à l'atteinte d'une valeur de seuil de la puissance électrique.

16. Procédé selon l'une des revendications 13 à 15, **caractérisé en ce que** l'établissement du niveau dominant sur le bus est modifié par modification de l'intensité du premier courant électrique ou par pilotage d'un courant électrique supplémentaire parallèlement au premier courant électrique.

17. Procédé selon l'une des revendications 13 à 16, **caractérisé en ce que** l'information indiquant si le procédé d'établissement accéléré d'un niveau sur le bus est actif est renvoyée au contrôleur de communication ou au microcontrôleur de commande.

18. Procédé selon l'une des revendications 13 à 17, **caractérisé en ce que** les participants peuvent prendre un premier état à besoin d'énergie réduit, depuis lequel ils peuvent être transférés en un deuxième état actif par un message quelconque, prédéterminé ou prédéterminable.

19. Procédé selon la revendication 18, **caractérisé en ce que** dans le premier état, les participants détectent les messages reçus, qu'ils soient envoyés de manière accélérée ou non accélérée, en tant que message d'éveil prédéterminé ou prédéterminable qui leur est envoyé et prennent le deuxième état lors de leur réception.

20. Procédé selon la revendication 19, **caractérisé en ce que** dans le premier état, lors de la réception de messages quelconques, les participants prennent un troisième état dans lequel il détectent les messages reçus ensuite, que ces derniers aient été envoyés de manière accélérée ou non accélérée, en tant que message prédéterminé ou prédéterminable de réveil qui leur est envoyé et **en ce que** dans le troisième état, les participants prennent le deuxième état lors de la réception d'un message de réveil qui leur est envoyé.
